# EUROPEAN PATENT APPLICATION

(11) **EP 1 411 065 A1**
(43) Date of publication of application: **21.04.2004**
(21) Application number: 03103610.6
(22) Date of filing: 30.09.2003
(51) Int. Cl.: C08B 11/08, C08B 11/20

(54) **Rheology modifiers for building products**

(30) Priority: 14.10.2002 IT VA20020051
(71) Applicant: Lamberti Spa, 21041 Albizzate (IT)
(72) Inventor: Tenconi, Mauro, Dr., 21045 Gazzada (VA) (IT); Langella, Valentina, Dr., 80058 Torre Annunziata (NA) (IT); Pfeiffer, Ugo, Dr., 20149 Milano (IT); Li Bassi, Giuseppe, Dr., 21026 Gavirate (VA) (IT)

(57) **Abstract**

The present invention relates to a rheology modifier for building products containing from 50 to 80% by weight of hydroxyethyl cellulose and less than 10% by weight of water and to a procedure for its preparation.

## Description

The present invention relates to a rheology modifier based on hydroxyethyl cellulose suitable for use in building products, i.e. water based paints and varnishes, dry pre-mixed cement or gypsum compositions, mortars, adhesives, and to a procedure for its manufacture.

Particularly the rheology modifiers of the invention possess, in alkaline formulations, such as the above mentioned building products, properties which are improved if compared with the properties of the hydroxyethyl cellulose normally employed for the same scope.

As a matter of fact, the stability of the viscosity of said aqueous alkaline formulations is sensibly improved against thermal degradation.

This behaviour is reflected in the improved stability over time of the alkaline aqueous compositions containing the rheology modifiers of the invention, which are therefore particularly useful for formulating building products.

### STATE OF THE ART

The use of cellulose ethers as additives for water based paints and varnishes, for cementitious mortars and for many other building products is well known and stabilised, as described by way of example in US 3,030,258, US 3,243,307 and EP 879,826.

The cellulose ethers impart to said products the suitable viscosity and fluidity, together with the working times appropriate for correct application.

Among the cellulose ethers normally used in formulating mortars and water-based paints and varnishes, hydroxyethyl cellulose has acquired in the practice a great relevance.

Commercially many kinds of hydroxyethyl cellulose with different substitution degrees and different molecular weights (different viscosity) are available.

The degree of molar substitution (or MS, or Molar Substitution) controls its solubility in water and the hydroxyethyl celluloses on the market generally have an MS between 1.5 and 3.8.

High viscosity hydroxyethyl celluloses show good thickening properties, while low viscosity hydroxyethyl celluloses are usually employed as stabiliser for cement and gypsum compositions.

For the use in building products, all commercially available hydroxyethyl celluloses are suitable; we cite, as an example, the celluloses sold under the trade name Natrosol® or Cellosize®.

Hydroxyethyl cellulose is normally produced starting from cellulose and an aqueous solution of sodium hydroxide in the presence of a solvent miscible with water, such as isopropyl alcohol, and by subsequent etherification with ethylene oxide.

The etherification reaction is accompanied by the formation of several byproducts such as salts, glycols and polyglycols, so that the state of the art teaches many methods for the purification of hydroxyethyl cellulose, which are directed to improve, depending on the particular application, the colour, the insoluble residue and the percentage of active substance (we cite: US 3,049,537, US 4,404,370, WO 0242334).

The hydroxyethyl celluloses which are available on the market are all "purified" and have an active substance content normally comprised between 92 and 98% by weight.

The various purification procedures involve washing with mixtures of solvents, such as mixtures alcohol/water or alcohol/acetone, or, as described in US 4,537,958, washing with water the reaction product that had been previously cross-linked and made insoluble in water.

All these methods are very costly in terms of time and money and imply loss of product during the washing steps.

### SUMMARY OF THE INVENTION

It has now surprisingly been found that, by isolating the product obtained from the etherification reaction of cellulose with ethylene oxide by means of removal by distillation of the mixture of solvents used for the reaction and then directly proceeding with the drying of the thus obtained crude product, without any purification, a rheology modifier based on hydroxyethyl cellulose is obtained that, because of its rheological characteristics in alkaline conditions (pH=8 or greater), is particularly suitable for the use in building products.

As a matter of fact, normally, the "purified" hydroxyethyl celluloses in the strong alkaline conditions of cementitiuous or mortar compositions, do not show a stable, long lasting viscosity over time, as it is demonstrated in the experimental ageing tests performed on solutions containing the rheology modifier of the invention and some commercially available hydroxyethyl celluloses, test that were conducted even at temperature above 100°C.

It is therefore a fundamental aspect of the present invention a rheology modifier containing from 50 to 80% by weight of hydroxyethyl cellulose and less than 10% by weight of water.

This rheology modifier is particularly suitable for the use in building products.

In the preferred forms of realisation of the present invention the rheology modifiers contains from 60 to 70% by weight of hydroxyethyl cellulose and from 2 to7 % by weight of water.

It is a further object of the present invention a procedure for the preparation of a rheology modifier based on hydroxyethyl cellulose for use in building products characterised by the fact that it comprises the following steps:
a. an alkali cellulose solution is prepared by reaction of from 0.8 to 2.5 parts by weight of cellulose and a 15-30% by weight aqueous solution of sodium hydroxide;
b. from 1 to 5 parts by weight of a C₁-C₅ aliphatic alcohol are added for each part by weight of cellulose;
c. the alkaline cellulose is etherified adding ethylene oxide to obtain an MS comprised between 1.5 and 3.0 and neutralising the reaction mixture with acetic acid;
d. a water/alcohol mixture is then removed by distillation until the concentration of alcohol in the resulting product is lower than 1% by weight (expressed as isopropyl alcohol);
e. the thus obtained final product is then dried until its water content is lower than 10% by weight.

### DETAILED DESCRIPTION

According to a preferred form of realisation of the present invention, for the preparation of the alkaline cellulose, a cellulose having molecular weight from 50.000 to 1.000.000 is employed.

Preferably the aliphatic alcohols used in the etherification of the alkaline cellulose are isopropyl alcohol and/or ter-butyl alcohol , the etherification temperature is comprised between 40 and 80°C and the reaction time is 1 to 5 hours.

The amount of ethylene oxide in step c. is chosen according to the desired molar substitution (MS), as it is well known by the person skilled in the art.

Preferably the distillation of the water/alcohol mixture is conducted until the content of dried matter in the reaction mixture is from 60 to 80% by weight, thus obtaining a damp, dischargeable, flowing product that can be directly dried.

For the accomplishment of the drying step a fluid bed drier at a temperature below 120°C is preferably used.

The thus obtained rheology modifier based on hydroxyethyl cellulose is in the form of a white, or slightly yellowish, powder which is quickly dissolvable in water, both cold and warm.

The content of hydroxyethyl cellulose in the rheology modifier obtained using the above described procedure is normally comprised between 50 and 80% by weight, preferably between 60 and 70% by weight.

Tests to determine resistance to alkaline degradation were performed on some solutions thickened with the rheology modifier of the invention, in order to evaluate, under forced conditions (high temperature) their stability over time; the tests were made in comparison with solutions thickened with samples of purified hydroxyethyl cellulose.

The data obtained from these tests clearly demonstrate that the rheology modifier of the invention possess a superior resistance to degradation in respect of the purified hydroxyethyl cellulose.

In the following examples, the analytical methods hereafter described are used:

The content of hydroxyethyl cellulose in the samples was measured by difference, subtracting from the total weight of the sample the amount of water, the amount of ashes and the amount of substances removable washing the sample with 100% by weight of a cold mixture acetone/methanol 60/40.

The amount of water was measured with a Karl Fischer apparatus.

The ashes were determined by calcination in a muffle oven at 650°C.

The viscosity was measured by Brookfield viscosimeter at 20°C and 20 rpm at the reported concentrations.

The degree of substitution of the hydroxyethyl cellulose in the samples was determined by gas chromatography, according to ASTM standard method D4797.

### Example 1.

Preparation of the rheology modifier HEC G.

Unless differently reported, all parts are by weight.

In a horizontal reactor, under nitrogen, 100 parts of dried cellulose linters, 400 parts of isopropyl alcohol and 120 parts of 30% aq. NaOH are charged.

The reaction mixture is kept for two hours at 20°C.

48 parts of ethylene oxide are then added at a pressure of 2.2 bar.

The mixture is warmed up until the temperature reaches 55°C and it is kept at 55°C for one hour.

Then the mixture is partially neutralised by addition of 50 parts of 80% acetic acid.

In one hour 55 parts of ethylene oxide are further continuously added. When the addition is completed the temperature is risen to 70°C and maintained for 30 minutes.

The mixture is cooled, is neutralised with acetic acid, and the mixture water/isopropyl alcohol is removed by distillation at reduced pressure (-0.8 bar) until the alcoholic grade of the instant distillate is 40%; the thus obtained product is dried at 100°C until the water content is 2.6% (HEC G) From the analysis performed on HEC G samples, the content of hydroxyethyl cellulose is 63.6% by weight; the content of ashes 15.5% and the MS is 1.7.

### Example 2.

### Preparation of the rheology modifier HEC F.

A rheology modifier is prepared as described in Example 1, but starting with cellulose from wood, and drying the final product until the content of water is 4% by weight (HEC F)

From the analysis performed on HEC F samples, the content of hydroxyethyl cellulose is 61.9% by weight; the content of ashes 14.5% and the MS is 1.6.

### Example 3 (comparative).

### Preparation of a purified hydroxyethyl cellulose HEC GW.

HEC G is purified by washing it with 100% by weight of a cold mixture acetone/methanol 60/40 (HEC GW).

From the analysis performed on HEC GW samples, the content of hydroxyethyl cellulose in HEC GW is 98% by weight.

### Example 4 (comparative).

### Preparation of a purified hydroxyethyl cellulose HEC FW

HEC F is purified by washing it with 100% by weight of a cold mixture acetone/methanol 60/40 (HEC FW).

From the analysis performed on HEC FW samples, the content of hydroxyethyl cellulose in HEC FW is 97% by weight.

### Example 5.

### Degradation tests on alkaline solutions containing the rheology modifiers HEC G, HEC F and the purified hydroxyetyl cellulose HEC GW and HEC FW.

Aqueous solutions are prepared with samples of the substances under test at the concentration (expressed as the actual percentage of hydroxyethyl cellulose in the solution) and at the pH reported in the following tables (Table1-4); the pH is regulated by addition of NaOH .

The aqueous solutions are kept in a closed jar in an oven at the temperature reported in Table 1-4; periodically (see table 1-4), the viscosity is measured.

The results are reported in Table 1-4.

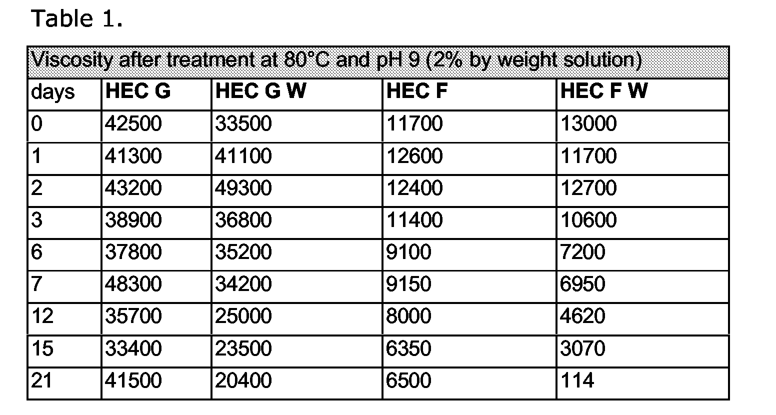

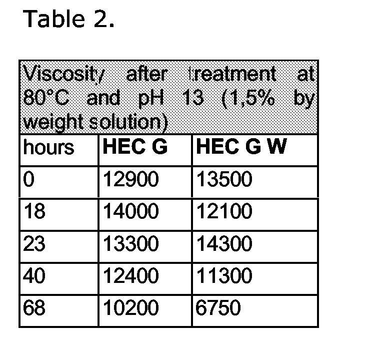

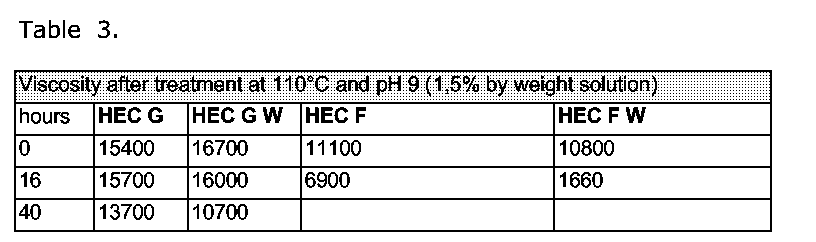

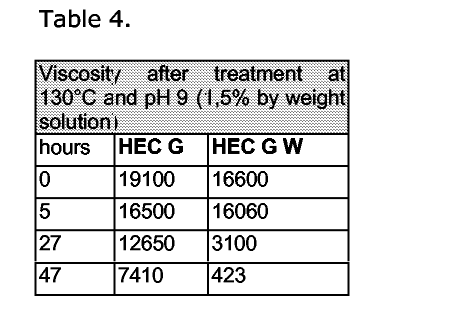

## Claims

1. The procedure for the preparation of a rheology modifier based on hydroxyethyl cellulose for use in building products **characterised by** the fact that it comprises the following steps:
a. an alkali cellulose solution is prepared by reaction of from 0.8 to 2.5 parts by weight of cellulose and a 15-30% by weight aqueous solution of sodium hydroxide;
b. from 1 to 5 parts by weight of a C₁-C₅ aliphatic alcohol are added for each part by weight of cellulose;
c. the alkaline cellulose is etherified adding ethylene oxide to obtain an MS comprised between 1.5 and 3.0 and neutralising the reaction mixture with acetic acid;
d. a water/alcohol mixture is then removed by distillation until the concentration of alcohol in the resulting product is lower than 1% by weight (expressed as isopropyl alcohol);
e. the thus obtained final product is then dried until its water content is lower than 10% by weight.

2. The procedure for the preparation of a rheology modifier based on hydroxyethyl cellulose for use in building products according to claim 1., wherein for the preparation of the alkaline cellulose, a cellulose having molecular weight from 50.000 to 1.000.000 is employed.

3. The procedure for the preparation of a rheology modifier based on hydroxyethyl cellulose for use in building products according to claim 1. or 2., wherein the aliphatic alcohols used in the etherification of the alkaline cellulose are isopropyl alcohol and/or ter-butyl alcohol.

4. The procedure for the preparation of a rheology modifier based on hydroxyethyl cellulose for use in building products according to any of the proceeding claims, wherein the etherification temperature is comprised between 40 and 80°C and the reaction time is 1 to 5 hours.

5. The procedure for the preparation of a rheology modifier based on hydroxyethyl cellulose for use in building products according to any of the proceeding claims, wherein the distillation of the water/alcohol mixture is conducted until the content of dried matter in the reaction mixture is from 60 to 80% by weight.

6. The procedure for the preparation of a rheology modifier based on hydroxyethyl cellulose for use in building products according to any of the proceeding claims, wherein for the accomplishment of the drying step a temperature below 120°C is used.

7. The rheology modifier based on hydroxyethyl cellulose for use in building products obtained from the procedure according to any of the claims from 1. to 6. and containing from 50 to 80% by weight of hydroxyethyl cellulose and less than 10% by weight of water

8. Rheology modifier according to claim 7., containing from 60 to 70% by weight of hydroxyethyl cellulose and from 2 to7 % by weight of water.
